# EUROPÄISCHE PATENTSCHRIFT

(11) **EP 3 066 529 B1**
(45) Veröffentlichungstag und Bekanntmachung des Hinweises auf die Patenterteilung: **01.01.2020**
(21) Anmeldenummer: 14796034.8
(22) Anmeldetag: 05.11.2014
(51) Int. Cl.: G05B 17/02, G01M 17/00, G05B 23/02, B60W 50/04

(54) **VIRTUELLE TESTOPTIMIERUNG FÜR FAHRERASSISTENZSYSTEME**
VIRTUAL TEST OPTIMIZATION FOR DRIVER ASSISTANCE SYSTEMS
OPTIMISATION VIRTUELLE D'ESSAIS DE SYSTÈMES D'AIDE À LA CONDUITE

(30) Priorität: 05.11.2013 AT 507292013
(43) Veröffentlichungstag der Anmeldung: 14.09.2016
(73) Patentinhaber: AVL List GmbH, 8020 Graz (AT)
(72) Erfinder: PRILLER, Peter, A-8111 Judendorf-Strassengel (AT)
(74) Vertreter: Patentanwälte Pinter & Weiss OG
(86) Internationale Anmeldenummer: PCT/EP2014/073797
(87) Internationale Veröffentlichungsnummer: WO 2015/067649

(56) Entgegenhaltungen:
- AT-A2- 505 326
- US-A1- 2005 119 865
- US-A1- 2008 183 456
- US-A1- 2009 300 422

## Beschreibung

Die gegenständliche Erfindung betrifft ein Verfahren zur Validierung eines Fahrerassistenzsystems eines Fahrzeuges wobei für ein vorgegebenes Testszenario durch Testparameter definierte Tests durchlaufen werden.

In mittlerweile nahezu allen Fahrzeugklassen halten Fahrerassistenzsysteme Einzug, mit dem erklärten Ziel, Unfälle oder zumindest schwere Verletzungen und Fatalitäten stark zu reduzieren.

Derzeitige Fahrerassistenzsysteme sind jeweils für spezifische Fahrsituationen ausgelegt, beispielsweise ein Antiblockiersystem (ABS) wirkt einem möglichen Blockieren der Räder entgegen, Elektronisches Stabilitätsprogramm (ESP) wirkt einem möglichen Ausbrechen des Fahrzeuges entgegen, Automatic Cruise Control (ACC) erlaubt lockeres Hintereinanderfahren auf Autobahnen, Bremsassistenten unterstützen den Fahrer bei Gefahrenbremsungen, Lane Keep Assist System (LKAS) hilft dem Fahrer als Spurhalteassistent die Spur, beispielsweise auf Autobahnen, zu halten, wobei viele weitere Fahrerassistenzsysteme bekannt sind. Da in modernen Fahrzeugen in den seltensten Fällen lediglich ein Fahrerassistenzsystem zur Anwendung kommt, wird bei neueren Fahrzeuggenerationen von einem erweiterten Assistenzsystem, also der Kombination mehrerer Fahrerassistenzsysteme gesprochen.

Wichtig bei der Entwicklung beziehungsweise beim Testen und Validieren von Fahrerassistenzsystemen ist es, möglichst viele Situationen beziehungsweise Testszenarien, die den Eingriff eines Fahrerassistenzsystems erfordern, schon in der Entwicklungsphase zu berücksichtigen, um das wunschgemäße Eingreifen des Fahrerassistenzsystems bereits in der Testphase überprüfen zu können.

Nur beispielhaft dazu sei der dichte, innerstädtische Verkehr angeführt, dessen Komplexität es nahezu unmöglich macht, alle möglichen Situationen im Zuge der Testphase berücksichtigen zu können. Weiters ist zu berücksichtigen, dass der Eingriff eines Fahrerassistenzsystems möglicherweise zu einer neuen Situation führen kann, welche zum Eingriff eines weiteren Fahrerassistenzsystems führt. Dies kann zu neuen Verkehrsszenarien führen, welche in der ursprünglichen Testphase nicht berücksichtigt beziehungsweise in Betrachtung gezogen wurden.

Die AT 505 326 A2 zeigt einen virtuellen Motorprüfstand zur Simulation eines realen Motorprüfstands, um den Applikationsaufwand bzw. die Parametrierung an einem realen Prüfstand zu verringern. Die US 2005/0119865 A1 nennt eine Methode zur Überwachung eines technischen Systems, beispielsweise einer Komponente eines Kraftfahrzeuges. Grund für die Überwachung ist eine möglicherweise fehlerhafte Funktion des technischen Systems. Die US 2008/0183456 A1 zeigt eine Methode und eine dazu passende Vorrichtung, um ein elektrisches Kontrollsystem, beispielsweise einen zu einer Verbrennungskraftmaschine gehörigen Bauteil, zu testen. Die genannten Druckschriften haben gemein, dass sie keine Fahrerassistenzsysteme, bzw. die Validierung ebendessen behandeln.

In Bezug auf die Bildung unterschiedlichster Testszenarien für die Überprüfung und Optimierung von Fahrerassistenzsystemen zeigt beispielsweise die DE 10 2011 088 807 A1 ein Verfahren, bei welchem aus einem vorgegebenen Testszenario mittels der Monte Carlo Simulation, also einem stochastischen Verfahren, eine Vielzahl weiterer Testszenarien erstellt wird. Für jedes, auf diese Weise erstellte Szenarium, wird jeweils ein Verlauf mit, und ein Verlauf ohne Eingriff des Fahrerassistenzsystems simuliert. Durch den Vergleich dieser beiden Szenarien wird es möglich, quantitative Maße für die Auswirkungen des Eingriffs des Fahrerassistenzsystems zu finden. Beispielsweise kann für jedes der Szenarien ein Unfallrisiko, ein Schadensrisiko oder Ähnliches quantifiziert werden.

Nachteilig ist zu sehen, dass ein Ergebnis eines simulierten Szenariums keine Auswirkung auf die Simulation eines anderen Szenariums hat und die Szenarien ausschließlich durch das stochastische Verfahren erstellt werden. Die Daten die sich aus einem simulierten Szenarium ergeben, werden daher nicht zur Verbesserung, Veränderung beziehungsweise Erstellung eines weiteren Szenariums herangezogen.

Die DE 10 2008 027 509 A1 zeigt ein Verfahren, um ein Fahrerassistenzsystem bezüglich seiner Effektivität bereits in der Planungsphase bewerten zu können. Dazu wird eine Simulation, welche auf den Messdaten eines realen Unfalls basieren, durchgeführt. An entscheidenden Stellen der Simulation wird eine Untersimulation erzeugt, die das Eingreifen eines Fahrerassistenzsystems beinhaltet. Dieses Eingreifen kann beispielsweise die Aktivierung eines automatischen Bremssystems mit unterschiedlichen Verzögerungen beinhalten. Die Ergebnisse, beziehungsweise der Ausgang der Unfallsituation, werden als Simulationsdatensatz gespeichert. Bezüglich des als Basis dienenden Unfalls, dessen Daten für die Simulation herangezogen wurden, können so beispielsweise für unterschiedliche Verzögerungen entsprechende Aktivierungszeitpunkte für ein automatisches Bremssystem errechnet werden, welche zu einer Vermeidung des Unfalls führen. Auf diese Weise wird eine Datenbank von Simulationsdatensätzen geschaffen, die für eine Vielzahl von Fahrerassistenzsystemen genutzt werden kann, um eine verlässliche, auf realen Daten basierende Aussage über die Wirksamkeit des Fahrerassistenzsystems zu erhalten.

Nachteilig ist, dass lediglich auf Messdaten von tatsächlich eingetretenen Unfallsituationen zugegriffen wird. Szenarien, für welche keine Unfalldaten vorhanden sind, Daten einer Fahrsituation, bei der es zu keinen Verlust der Fahrzeugkontrolle gekommen ist, beziehungsweise aus erfolgreich verhinderten Unfällen oder "beinahe"-Unfällen, finden im vorgestellten Verfahren keine Nutzung. Daher wird eine Reihe an Messdaten, welche möglicherweise zur Erstellung weitere Testszenarien durchaus geeignet wären, verworfen. Gerade der kritische Bereich zwischen durch ein Fahrerassistenzsystem verhindertem Unfall und eingetretenem Unfall beziehungsweise Kontrollverlust, ist jener Bereich, der beim Testen von Fahrerassistenzsystemen größtmögliches Potential für die Weiterentwicklung in sich trägt. Für das erfolgreiche Eingreifen eines Fahrerassistenzsystems ist dessen Wirken in besagtem kritischen Bereich ausschlaggebend.

Es ist daher die Aufgabe der gegenständlichen Erfindung, das umfangreiche Testen und die Validierung eines Fahrerassistenzsystems zu ermöglichen.

Diese Aufgabe wird dadurch gelöst, dass während eines ersten Tests zumindest ein Testparameter bestimmt wird und zur Erstellung eines zweiten Tests der erste Test derart abgeändert wird, um den Testparameter innerhalb eines ihm zugeordneten kritischen Bereichs, innerhalb dessen ein Fahrerassistenzsystem aktiv in ein Fahrgeschehen eingreift, zu verschieben und für das vorgegebene Testszenario der zweite Test durchlaufen wird um das Fahrerassistenzsystem zu validieren. Dadurch wird sichergestellt, dass insbesondere kritische Bereiche, innerhalb derer ein Fahrerassistenzsystem aktiv in das Fahrgeschehen eingreift, bei der Erstellung weiterer Tests berücksichtigt werden und Tests deren Ausgang vorerst als positiv bewertet wurde ebenfalls für weitere Untersuchung herangezogen werden. Kritische Bereiche sind dabei günstigerweise durch eine obere und eine untere Grenze für den Testparameter begrenzt. Durch die Berücksichtigung jener kritischen Bereiche und des, basierend auf den bestimmten Testparametern, gezielten Abänderns des Tests, können auch Tests erstellt werden, welche möglicherweise versteckte Mängel in den Fahrerassistenzsystemen aufzeigen können.

Bei den Testparametern handelt es sich beispielsweise um die Fahrbahnbreite, Kurven- bzw. Krümmungsradius einer Kurve oder die Fahrzeuggeschwindigkeit, usw.

Eine vorteilhafte Ausgestaltung sieht vor, dass der Testparameter selbst verändert wird, so dass er innerhalb eines kritischen Bereichs liegt. Somit kann ein Testparameter, beispielsweise die Geschwindigkeit, direkt verändert werden, wodurch sich für einen weiteren Test eine neue Ausgangssituation ergibt. Mögliche Veränderungen sind dabei Erhöhen oder Verringern des Testparameters.

Eine weitere vorteilhafte Ausgestaltung sieht vor, dass der Testparameter von weiteren zweiten Testparametern abhängig ist und dass diese weiteren zweiten Testparameter so verändert werden, dass der Testparameter innerhalb eines kritischen Bereichs liegt. Das Verändern der zweiten Testparameter kann ebenfalls durch Erhöhen oder Verringern erfolgen. Dies erlaubt es einen ersten Testparameter indirekt zu beeinflussen und dadurch mögliche Zusammenhänge, beziehungsweise das Zusammenwirken einzelner Testparameter, zu erkennen. Durch die indirekte Beeinflussung können Wechselwirkungen erkennbar werden, welche wiederum zu neuen möglichen Tests führen.

Eine vorteilhafte Ausgestaltung sieht vor, dass zur Erstellung des zweiten Tests der erste Test so abgeändert wird, dass der Testparameter einen zugeordneten Grenzwert, bei dessen Erreichen oder Überschreiten das Fahrerassistenzsystem (3) zur Hilfestellung aktiviert wird, überschreitet. Das Ändern des Tests kann beispielsweise durch Erhöhen oder Verringern erster und/oder zweiter Parameter erfolgen. Dadurch wird bewusst die Aktivierung eines Fahrerassistenzsystems provoziert, was im Weiteren zu einem neuen Verlauf des zweiten Tests führt.

Dies erlaubt es die Aussagekraft des zweiten Tests, beispielsweise dadurch, dass bewusst oder gezielt ein Kontrollverlust herbeigeführt wird, entsprechend zu erhöhen, da die Wirkung beziehungsweise die Effektivität des infolge aktivierten Fahrerassistenzsystems ersichtlich wird.

Eine weitere vorteilhafte Ausgestaltung sieht vor, dass die Tests im realen Fahrversuch und/oder auf entsprechenden Prüfständen mit einem zumindest teilweise realen Fahrzeug und/oder auch gänzlich virtuell durchgeführt werden. Dies erlaubt ein einfaches Anwenden des Verfahrens auf unterschiedlichsten, bereits bestehenden, Test- beziehungsweise Prüfeinrichtungen.

Vorteilhaft ist vorgesehen, dass das Fahrerassistenzsystem aus mehreren, einzeln wirkenden Fahrerassistenzsystemen gebildet wird. Wie bereits in der Einleitung erwähnt, stellt dies den üblichen Zustand in heutigen Fahrzeugen dar. Wird dieser Umstand auch beim Prüfen und Validieren eines Fahrerassistenzsystems berücksichtigt, erlaubt dies, auch das Zusammenwirken verschiedener Systeme beziehungsweise deren gegenseitige Beeinflussung zu erkennen und zu berücksichtigen.

Eine ebenfalls vorteilhafte Ausgestaltung sieht vor, dass dem Fahrerassistenzsystem reale oder virtuelle Sensordaten zur Verfügung gestellt werden, dass das Fahrerassistenzsystem aus den Sensordaten Testparameter errechnet, daraus eine interne Fahrsituation erstellt und die interne Fahrsituation mit der realen oder virtuellen Fahrsituation verglichen wird. Wurden Sensordaten vom Fahrerassistenzsystem falsch verarbeitet/errechnet ergibt sich zwischen den, für die interne Fahrsituation, errechneten Testparametern und deren tatsächlichen Werten, welche die Fahrsituation beschreiben, eine gewisse Differenz. Dies erlaubt ein frühzeitiges Erkennen nicht oder falsch erkannter beziehungsweise klassifizierter Objekte durch das Fahrerassistenzsystem. Dadurch können, möglicherweise versteckte Fehler im Fahrerassistenzsystem, welche die Wahrnehmung der Umgebung betreffen, bereits in der Entwicklungsphase erkannt werden.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 den Zusammenhang zwischen kritischen Bereich, Grenzwert und Lage eines Testparameters,
Fig.2 den Zusammenhang zwischen kritischen Bereich, Lage eines Testparameters, und eines sich verändernden Grenzwertes,
Fig. 3 das erfindungsgemäße Schema des Verfahrens zur Validierung eines Fahrerassistenzsystems,
Fig.4 einen Ausschnitt aus dem in Figur 3 dargestellten Schema mit einer vorteilhaften Ergänzung.

In weiterer Folge werden zur Beschreibung des erfindungsgemäßen Verfahrens eine Reihe an Begriffen genutzt, welche zu Beginn erläutert werden.

Unter Testszenario 4 wird eine gewisse Rahmenbedingung/Umgebung, beispielsweise das Durchfahren einer Kurve mittels eines Fahrzeuges, verstanden. Andere Testszenarien 4 könnten beispielsweise das Befahren von Steigungen oder Gefällen, oder die Geradeausfahrt mit einem Hindernis oder anderen Verkehrsteilnehmern auf der Fahrbahn umfassen, wobei weiters eine Vielzahl an anderen Testszenarien 4 denkbar sind.

Sämtliche physikalischen und dynamischen Indikatoren werden als Testparameter P bezeichnet. Die Testparameter P umfassen beispielsweise die Fahrbahnbreite, welchen Krümmungsradius eine Kurve aufweist, Fahrbahnkennwerte wie Haft- und Reibwerte, Fahrbahntemperatur, Luftfeuchtigkeit, Windstärke und Windrichtung, mit welcher Geschwindigkeit das Fahrzeug die Kurve durchfährt, welche Querbeschleunigung das Fahrzeug aufweist, welcher Schlupf an den Rädern (ggf. an jedem einzelnen) vorliegt, wie groß ein Hindernis ist und wo es sich befindet, wo und wie schnell sich andere Verkehrsteilnehmer bewegen, etc. Grundsätzlich ist zu beachten, dass die Erhöhung oder Verringerung eines Testparameters P, abhängig von dessen Eigenschaft, unterschiedliche Auswirkungen haben kann. Beispielsweise führt eine Erhöhung der Geschwindigkeit eher zu einem Kontrollverlust/Unfall, die Erhöhung der Bodenhaftung steigert hingegen die Kontrollierbarkeit des Fahrzeuges. Wird in weiter Folge auf die Erhöhung oder Verringerung eines Testparameters P Bezug genommen, ist jene Änderung des Testparameters P gemeint, welche es erlaubt den Testparameter P in seinen kritischen Bereich 7, welcher in weiterer Folge näher beschrieben wird, zu verschieben.

Der Test T(n) wird aus der Kombination aus Testszenario 4 und Testparameter P gebildet. Der Test T(n) beinhaltet somit, wo (Testszenario 4) sich ein Fahrzeug, unter welchen Bedingungen (Testparameter P), bewegen soll. Ein Test T(n) könnte das Befahren einer Kurve mit geringer Geschwindigkeit bei trockener Fahrbahn beinhalten. Ein anderer Test T(n+1) könnte das Befahren der gleichen Kurve, mit wesentlich höherer Geschwindigkeit, Seitenwind und stellenweiser, eisglatter Fahrbahn beinhalten. Ein neuer Test T(m) nutzt ein neues Testszenario 4 und beinhaltet beispielsweise das Geradeausfahren, bergab bei nasser Fahrbahn. Der Test T(n) kann entweder real, mit einem Fahrzeug auf einer Teststrecke, einem Fahrzeug auf einem Rollenprüfstand mit virtueller Umgebung oder auch vollkommen virtuell, in Form einer Simulation durchgeführt werden, wobei auch Mischformen denkbar sind. Bei einem realen Test werden oben beschriebene Testparameter P vom Fahrerassistenzsystem 3 in bekannter Weise über entsprechende Sensorik ermittelt. Wird die Umgebung virtuell simuliert, werden die Sensordaten entsprechend simuliert. Aus diesen realen oder simulierten Sensordaten werden durch das Fahrerassistenzsystem 3 Testparameter P errechnet. Wird beispielsweise dem Fahrerassistenzsystem 3 durch die realen oder simulierten Sensordaten eine Momentangeschwindigkeit zur Verfügung gestellt, errechnet das Fahrerassistenzsystem 3 aus deren zeitlichen Veränderung eine entsprechende Beschleunigung beziehungsweise Verzögerung. Auf diese Weise werden also auch Testparameter P vom Fahrerassistenzsystem 3 errechnet. Kommt eine oben genannte Mischform zur Anwendung werden auch Testparameter P entsprechend errechnet und/oder zur Verfügung gestellt.

Ein Fahrerassistenzsystem 3 eines Fahrzeuges hat, wie bereits in der Einleitung kurz erwähnt, die Aufgabe Unfälle oder zumindest schwere Verletzungen zu reduzieren. Ein Fahrerassistenzsystem 3 greift dazu, ohne das Zutun des Fahrers, aktiv in das Fahrgeschehen ein, um Unfälle und vor allem Schaden an Personen möglichst zu vermeiden. Als Fahrerassistenzsystem 3 kann eine Kombination aus mehreren Fahrassistenten, also beispielsweise von Antiblockiersystem (ABS) + Elektronisches Stabilitätsprogramm (ESP) + Antriebsschlupfregelung (ASR) + Lane Keep Assist System (LKAS), gesehen werden. Auch diese möglichen Kombinationen unterschiedlicher Fahrassistenten, werden in Folge als Fahrerassistenzsystem 3 bezeichnet.

Manche Testparameter P, wie beispielsweise die Fahrbahnbreite oder Kurven- beziehungsweise Krümmungsradius einer Kurve, können frei gewählt werden und verändern sich während des Tests T(n) nicht. Dies sind jene Testparameter P welche notwendig sind, um das Testszenario 4 für den Test T(n) genauer zu definieren, beispielsweise die Angabe des Kurvenradius, wenn als Testszenario 4 das Durchfahren einer Kurve gewählt ist. Testparameter P wie beispielsweise die Geschwindigkeit des Fahrzeuges werden vorerst frei vorgegeben, können sich jedoch im Verlauf des Tests T(n) ändern, da beispielsweise ein Fahrerassistenzsystem 3 die Geschwindigkeit reduziert.

Es ist also nachvollziehbar, dass Testparameter P nicht zwangsweise vorgegeben sein müssen. Sie können sich auch infolge unterschiedlichster Zusammenhänge ergeben, beziehungsweise sich während des Tests T(n) verändern. Gerät beispielsweise das Fahrzeug ins Schleudern, ändert sich während des Tests T(n) die Querbeschleunigung des Fahrzeuges, obwohl diese vorerst unbestimmt beziehungsweise nicht vorgegeben war. Manche Testparameter P können nicht "direkt" gewählt, sondern lediglich indirekt beeinflusst werden, wie beispielsweise der Schlupf, welcher unter anderem von Antriebsdrehmoment des Fahrzeuges und Reibwert zwischen Rädern und Fahrbahnoberfläche abhängig ist. Auch durch das Eingreifen eines Fahrerassistenzsystems 3 können Testparameter P, wie bereits am Beispiel der Geschwindigkeit erwähnt, während des Tests laufend verändert werden.

In diesem Zusammenhang wird von der Fahrsituation 5 gesprochen. Die Fahrsituation 5 umfasst jenen Zustand, jene Lage des Fahrzeuges, welche sich während des Tests T(n) einstellt. Sie ergibt sich aus den vorgegebenen, beziehungsweise sich während des Tests T(n) ergebenden, Testparameter P. Diese Fahrsituation 5 kann, wie bereits ausgeführt, beispielsweise durch eine höhere Querbeschleunigung als sie zuvor als Testparameter P festgelegt wurde gekennzeichnet sein. Eine solche Fahrsituation 5 könnte sich beim Test T(n), welcher das Befahren einer Kurve mit hoher Geschwindigkeit, Seitenwind und eisglatter Fahrbahn umfasst, einstellen, da das Fahrzeug schleudert.

Als kritischer Bereich 7 eines Testparameter P gilt jener Bereich zwischen kontrolliertem Fahrverhalten und einer unerwünschten Fahrsituation 5. Als kontrolliertes Fahrverhalten wird beispielsweise ein Fahrverhalten gesehen, bei welchem das Eingreifen eines Fahrerassistenzsystems 3 nicht notwendig ist. Als unerwünschte Fahrsituation 5 wird beispielsweise die Berührung eines weiteren Fahrzeuges, eines Randsteins etc. oder auch der teilweise oder gänzliche Kontrollverlust bezeichnet. Der kritische Bereich 7 wird durch eine untere Grenze 20 und eine obere Grenze 40 für den Testparameter P begrenzt. Unterhalb der unteren Grenze 20 des kritischen Bereichs 7 ist das Fahrverhalten kontrolliert und eine Aktivierung eines Fahrerassistenzsystems 3 nicht notwendig. Oberhalb der oberen Grenze 40 ist zwar ein Fahrerassistenzsystem 3 bereits aktiviert, das Vermeiden einer unerwünschten Fahrsituation 5, eines Unfalls, beziehungsweise das Wiederlangen der Kontrolle, jedoch nicht mehr möglich.

Zwischen unterer Grenze 20 und oberer Grenze 40 liegt besagter kritischer Bereich 7 innerhalb dessen es zum Kontrollverlust kommen kann, ein Fahrerassistenzsystem 3 aktiviert werden kann und durch die Hilfestellung des Fahrerassistenzsystems 3 die Kontrolle wieder hergestellt werden kann.

Testparametern P wird also ein kritischer Bereich 7 in Form einer unteren Grenze 20 und einer oberen Grenze 40 zugeordnet, innerhalb dessen üblicherweise eine Fahrsituation 5 eintritt, welche das Eingreifen eines Fahrerassistenzsystems 3 erfordern kann, beispielsweise eine gewisse Größe von Kräften, welche an einem der Reifen wirken und welche zum Verlust der Bodenhaftung führen würden. Diese kritische Bereiche 7 beziehungsweise deren untere Grenzen 20 und oberen Grenze 40, können beispielsweise durch fixe Werte, Kennlinien, Kennfelder, und dergleichen, für die einzelnen Testparameter P vorgegeben, oder auch frei gewählt werden.

Der kritische Bereich 7 eines Testparameters P ist jedoch nicht zwingend mit der Aktivierung des Fahrerassistenzsystems 3 gekoppelt. Ein Testparameter P kann also durchaus in seinem kritischen Bereich liegen, dennoch wurde das Fahrerassistenzsystem 3 noch nicht aktiviert. Die Aktivierung des Fahrerassistenzsystems 3 ist an den Grenzwert G eines Testparameters P, der innerhalb des kritischen Bereichs 7 liegt, gekoppelt.

Als Grenzwert G eines Testparameters P wird jener Wert gesehen, bei dessen Erreichen oder Überschreiten das Fahrerassistenzsystem 3 zur Hilfestellung aktiviert wird. Der Grenzwert G wird durch das Fahrerassistenzsystem 3 unter Nutzung von Diagrammen, Kennfeldern, Berechnungsformeln und dergleichen, welche beispielsweise auf bereits bekannte Fahrsituationen basieren, festgelegt, kann aber, wie in weiterer Folge beschrieben, auch während eines Tests T(n) variieren. Dieser Grenzwert G liegt innerhalb des kritischen Bereichs 7. Die Lage des Grenzwertes G ist abhängig von den gewählten und/oder sich während eines Tests T(n) einstellenden Testparametern P und kann sich daher auch im Verlauf eines Tests T(n) ändern. Beispielsweise sorgt ein Automatic Cruise Control (ACC) dafür, im Kolonnenverkehr ein Fahren mit konstantem Abstand zum vorausfahrenden Fahrzeug sicherzustellen. Der Grenzwert G, bei welchem ein automatisches Bremssystem aktiviert wird, ist vorerst vom Abstand und der Geschwindigkeit mit dem sich beide Fahrzeuge bewegen abhängig. Wird an einem der Räder des Fahrzeuges plötzlich erhöhter Schlupf festgestellt, geht das Fahrerassistenzsystem 3 von veränderten Fahrbahnverhältnissen aus und der Grenzwert G bei welchem ein automatisches Bremssystem aktiviert wird, wird entsprechend verringert, um auch bei "glatter" Fahrbahn einen Auffahrunfall vermeiden zu können.

Durch die Wechselwirkung der einzelnen Testparameter P miteinander können also nicht nur die Testparameter P selbst, sondern auch deren Grenzwerte G beeinflusst werden. Zwar sind diese Zusammenhänge in Kennfeldern darstellbar, dennoch kann davon ausgegangen werden, dass nicht alle Zusammenhänge für das Fahrerassistenzsystem 3 vollständig erfasst werden können.

Der Grenzwert G liegt nicht zwangsläufig an der unteren Grenze 20 des kritischen Bereichs 7, sodass ein Fahrerassistenzsystem aktiviert wird, sobald ein Testparameter P in den kritischen Bereich kommt. Beispielsweise ist vorstellbar, dass der Grenzwert G für den Testparameter P "Schlupf" etwa in der Mitte dessen zugeordneten kritischen Bereichs 7 liegt. Der Schlupf kann also während des Tests T(n) Werte annehmen, welche zwar innerhalb seines kritischen Bereichs liegen, durch welche sein Grenzwert G jedoch noch nicht überschritten ist und daher ein Fahrerassistenzsystem 3, wie beispielsweise eine Anti Schlupf Regelung (ASR) noch nicht zur Hilfestellung aktiviert wird. Über die Lage des Grenzwertes G innerhalb des kritischen Bereichs 7 wird also eine gewisse Toleranz 30 definiert, über welche gewählt wird, inwieweit ein Testparameter P zwar kritisch ist, jedoch eine Hilfestellung durch ein Fahrerassistenzsystem 3 "noch" nicht notwendig ist.

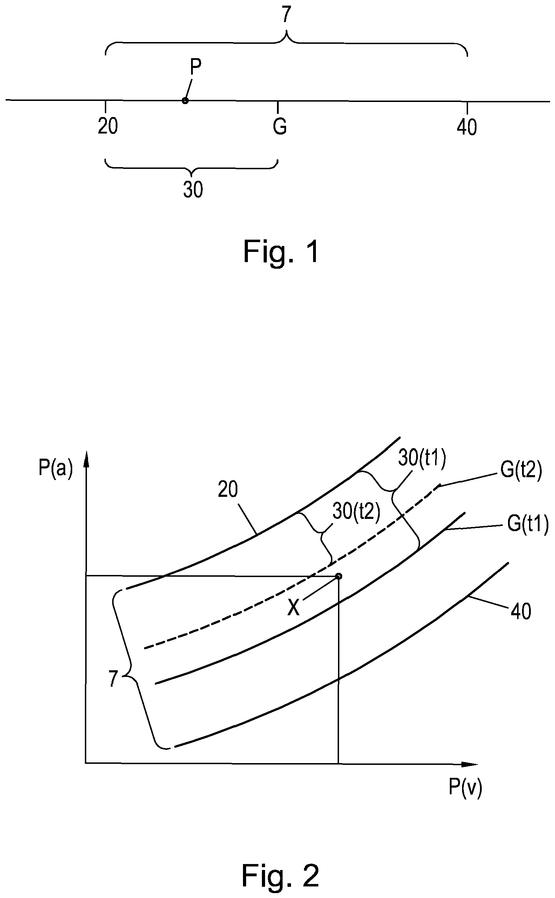

Figur 1 zeigt den Zusammenhang zwischen kritischen Bereich 7,dessen unterer Grenze 20 und oberer Grenze 40, Toleranz 30, Grenzwert G und Lage eines Testparameters P. Dargestellt ist eine "Momentaufnahme", da sich, wie bereits ausgeführt, die Lage eines Testparameters P und die Lage des zugehörigen Grenzwertes G im Verlauf des Tests T(n) ständig ändern kann. Beispielhaft ist die Lage des Grenzwert G, vorerst durch das Fahrerassistenzsystem 3 unter Nutzung von Diagrammen, Kennfeldern, Berechnungsformeln und dergleichen, welche beispielsweise auf bereits bekannte Fahrsituationen basieren, im Zentrum des kritischen Bereichs 7 gewählt, wobei auch jede andere Lage des Grenzwertes G durch das Fahrerassistenzsystem 3 gewählt werden kann. Umso näher der Grenzwert G an der unteren Grenze 20 des kritischen Bereichs 7 liegt, umso kleiner ist die Toleranz 30. Innerhalb der Toleranz 30 ist ein Testparameter P zwar kritisch, jedoch ein Fahrerassistenzsystem 3 "noch" nicht aktiviert und eine Hilfestellung bleibt aus. Beispielhaft befindet sich der Testparameter P genau innerhalb dieses Bereiches. Nimmt man in diesem Fall als Testparameter P den Schlupf an einem der Räder des Fahrzeuges an, bedeutet die Lage des Testparameters P innerhalb der Toleranz 30, dass bereits ein gewisser Schlupf vorhanden ist, dieser jedoch so gering ist, dass eine Hilfestellung durch das Fahrerassistenzsystem 3 noch nicht notwendig ist.

Figur 2 zeigt nochmals den Zusammenhang in Form eines Kennfeldes, zwischen kritischen Bereich 7, dessen unterer Grenze 20 und oberer Grenze 40, und dem Grenzwert G für zwei Testparameter P, welche voneinander abhängig sind, wobei die Möglichkeit der Verschiebung des Grenzwertes G innerhalb eines Tests T(n) zu zwei unterschiedlichen Zeitpunkten t1 und t2 dargestellt wird. Beispielsweise stellt der Testparameter P(v) die Geschwindigkeit eines ersten Fahrzeugs und der Testparameter P(a) den Abstand zu einem ihm vorausfahrenden zweiten Fahrzeugs dar. Der Zusammenhang zwischen den beiden Testparametern P(v) und P(a) wird durch den Punkt X im Kennfeld gekennzeichnet. Umso höher die Geschwindigkeit des ersten Fahrzeugs, also der Testparameter P(v) ist, umso größer muss auch der Abstand, also der Testparameter P(a), zum vorausfahrenden zweiten Fahrzeug sein, sodass Punkt X nicht in den kritischen Bereich 7 kommt oder den Grenzwert G überschreitet. Zu einem ersten Zeitpunkt t1 liegt der Punkt X zwar im kritischen Bereich 7, jedoch ist der Grenzwert G(t1)noch nicht überschritten, ein Fahrerassistenzsystem 3 wie beispielsweise ein automatisches Bremssystem also noch nicht aktiviert. Zu einem anderem Zeitpunkt t2 werden Geschwindigkeit des ersten Fahrzeugs, also der Testparameter P(v), und der Abstand zum vorausfahrenden zweiten Fahrzeug, also der Testparameter P(a), nicht verändert und die Lage des Punktes X bleibt gleich. Dadurch, dass sich die Fahrbahnverhältnisse an jener Stelle an der sich das erste Fahrzeug zum Zeitpunkt t2 befindet, von den Fahrbahnverhältnissen an jener Stelle an der sich das erste Fahrzeug zum Zeitpunkt t1 befand unterscheiden, beispielsweise durch eine Verschlechterung der Fahrbahnverhältnisse infolge von Feuchtigkeit, unterscheidet sich jedoch auch die Lage des Grenzwerts G(t2) von der Lage des ursprünglichen Grenzwerts G(t1). Punkt X hat daher den Grenzwert G(t2) überschritten und das Fahrerassistenzsystem 3 wurde aktiviert. Dadurch wird nochmals verdeutlicht, dass die Wechselwirkung der einzelnen Testparameter P nicht nur die Testparameter P selbst, sondern auch Grenzwerte G beeinflussen können.

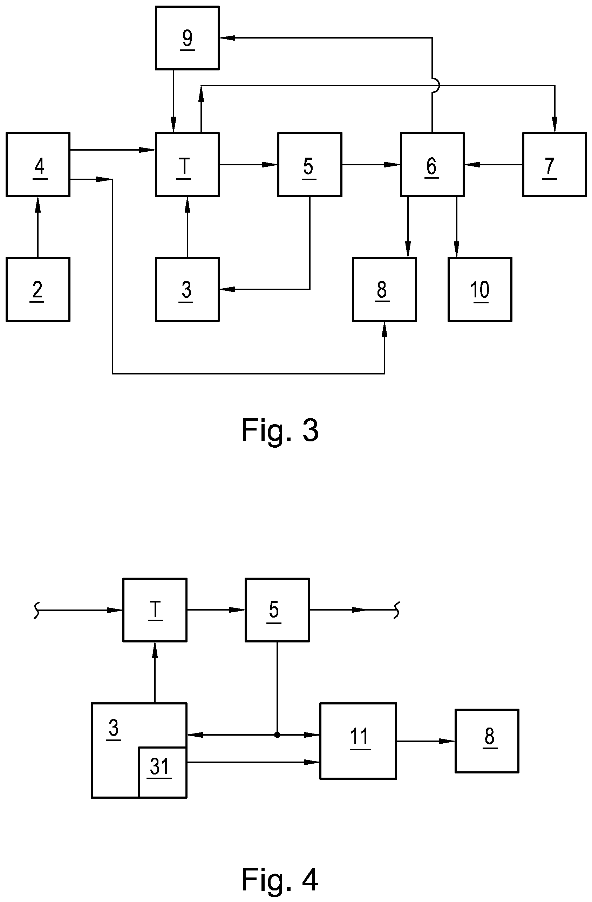

Figur 3 zeigt ein Schema des erfindungsgemäßen Verfahrens zum Testen und zur Validierung eines Fahrerassistenzsystems 3 eines Fahrzeuges. In einer Datenbank 2 werden beispielsweise verschiedene Rahmenbedingungen/Umgebungen (Testszenarien 4) gespeichert. Aus der Datenbank 2 wird eine Umgebung als Testszenario 4 herangezogen. Basierend auf das Testszenario 4 wird ein Test T(n) durchgeführt, bei dem entweder vorerst kein Eingriff eines Fahrerassistenzsystems 3 notwendig ist, oder das zu testende Fahrerassistenzsystem 3, gemäß seiner Aufgabe, auf das Fahrzeug unterstützend einwirkt. Der Test T(n) wird durch bereits beschriebene Testparameter P, wie beispielsweise Geschwindigkeit, Bodenhaftung, Abstand zum Fahrbahnrand, etc., in Kombination mit dem Testszenario 4 definiert.

Dazu wird bei einem realen Test die Fahrsituation 5 in der sich das Fahrzeug befindet, also die vorgegebenen, beziehungsweise sich während des Tests T(n) ergebenden, Testparameter P, vom Fahrerassistenzsystem 3 wie bereits beschrieben über entsprechende Sensorik ermittelt. Wird die Umgebung virtuell simuliert, werden dem Fahrerassistenzsystem 3 entsprechend simulierte Sensordaten beziehungsweise die Testparameter P zur Verfügung gestellt. Die Fahrsituation 5 kann also reale Sensordaten und/oder virtuell erstellten Daten umfassen. Basierend auf die Fahrsituation 5 werden, sollte dies im Rahmen des Tests T(n) notwendig sein, vom Fahrerassistenzsystem 3 entsprechende Maßnahmen gesetzt, um das Fahrzeug zu unterstützen. Durch diese Maßnahmen wird der Test T(n) in seinem Ablauf entsprechend beeinflusst, beziehungsweise Testparameter P verändert.

Wird der Test T(n) für das Testszenario 4 durchgeführt, ergibt sich eine gewisse Fahrsituation 5 welche, wie bereits ausgeführt, durch die gewählten beziehungsweise sich während des Tests T(n) ergebenden, Testparameter P definiert ist. Während des Tests T(n) werden die Testparameter P bestimmt, bei einem realen Test T(n) beispielsweise aus einem Steuergerät ausgelesen oder von Sensoren gemessen. Anhand der, den Testparametern P zugehörigen, kritischen Bereiche 7 erfolgt eine Bewertung 6 der Testparameter P.

Als Bewertung 6 wird der Vergleich der Testparameter P, welche sich durch die Fahrsituation 5 während des Tests T(n) ergeben haben, mit den ihnen zugeordneten, kritischen Bereichen 7 verstanden. Die Bewertung 6 kann beispielsweise ergeben, dass ein Testparameter P während des Tests T(n) unterhalb seines kritischen Bereichs 7 geblieben ist, somit auch seinen Grenzwert G nicht erreicht hat und daher das Fahrerassistenzsystem 3 nicht zum Einsatz gekommen ist. Das Ergebnis der Bewertung 6 beinhaltet also welche "Lagen" die Testparameter P innerhalb oder außerhalb des kritischen Bereichs 7 in Bezug auf dessen untere Grenze 20, obere Grenze 40 und des Grenzwertes G während des Tests T(n) eingenommen haben. Wird im Zuge des Tests T(n) die Überschreitung der oberen Grenze 40 eines kritischen Bereichs 7 detektiert, und ist es somit zum Kontrollverlust, zum Eindringen in den Gegenverkehrsbereich, zur Kollision mit einem anderen Fahrzeug oder einer anderen unerwünschten Fahrsituation 5 gekommen, so gilt der Test T(n) für das Testszenario 4 als "nicht bestanden".

Grundsätzlich sollte es ein Fahrerassistenzsystem 3 ermöglichen, einen Kontrollverlust, einen Unfall, eine Kollision mit anderen Fahrzeugen oder Gegenständen, etc. zu vermeiden. Ist der Test T(n) wie eben beschrieben jedoch nicht bestanden worden, könnte eventuell ein Fehler des Fahrerassistenzsystems 3 vorliegen, oder zumindest Potential zur Verbesserung und/oder Weiterentwicklung des Fahrerassistenzsystems 3 bestehen. Um die Gründe für das "Versagen" des Fahrerassistenzsystems 3 analysieren zu können, werden alle Testparameter P, welche gewählt wurden und/oder welche sich während des Tests T(n) ergeben/eingestellt haben, und ,um Zusammenhänge besser erkennen zu können, auch das Testszenario 4 einer Analyse 8 unterzogen, wodurch mögliche Fehler und/oder Schwachstellen des Fahrerassistenzsystems 3 erkannt werden können.

Wird der Test T(n) in der Form beendet, dass beispielsweise keiner der Testparameter P in seinen kritischen Bereich 7 gekommen ist oder zwar zumindest einer der Testparameter P in seinen kritischen Bereich 7 gekommen ist, aber seinen Grenzwert G nicht überschritten hat, werden sämtliche Testparameter P nach ihrer Bewertung 6 in einer Ergebnisdatenbank 10 abgelegt. Auch wenn ein Testparameter P seinen Grenzwert G überschritten hat, aber das Fahrerassistenzsystem 3 unterstützend und erfolgreich eingegriffen hat und somit entsprechende Spurtreue, rechtzeitiges Abbremsen bis zum Stillstand, etc. realisiert wurde, werden sämtliche Testparameter P nach ihrer Bewertung 6 in einer Ergebnisdatenbank 10 abgelegt. Dort stehen die Testparameter P für eventuelle spätere Analysen, zur Dokumentation, als Basis für weitere Entwicklungen oder ähnlichem weiterhin zur Verfügung.

Weiters werden in diesen Fällen die Testparameter P nach ihrer Bewertung 6 für eine Modifikation 9 herangezogen. Mithilfe dieser wird der modifizierte Test T(n+1) gebildet, welcher mit dem ursprünglichen, selben Testszenario 4, welches auch für Test T(n) genutzt wurde, arbeitet, mit dem Unterschied, dass ein beliebiger Testparameter P, welcher im Verlauf des Test T(n) unterhalb der unteren Grenze 20 oder auch innerhalb seines kritischen Bereichs 7 gelegen hat, bei dem Test T(n+1) mit hoher Wahrscheinlichkeit innerhalb seines kritischen Bereichs 7 liegt oder sogar seinen Grenzwert G überschreitet.

Dazu können, wie bereits erwähnt, manche, also auch mehrere, Testparameter P direkt verändert werden. Wie ebenfalls bereits erwähnt, besteht jedoch auch die Möglichkeit, dass ein erster Testparameter P von weiteren zweiten Testparametern P' abhängig ist. Um mit hoher Wahrscheinlichkeit sicherzustellen, dass der erste Testparameter P innerhalb seines kritischen Bereichs 7 liegt, können also auch diese, also auch mehrere, zweiten Testparameter P', welche den ersten Testparameter P beeinflussen, entsprechend, gegebenenfalls direkt, verändert werden. Der Vorgang der Modifikation 9 erfolgt dadurch, dass beispielsweise besagter erster Testparameter P, falls dies möglich ist direkt, oder jene zweiten Testparameter P' von welchen er abhängig ist, schrittweise, iterativ verändert wird beziehungsweise werden. Dabei kommt, wie bereits für die ersten Testparameter P erwähnt, ein Erhöhen oder Verringern des oder der zweiten Testparameter P' in Betracht. Iterativ bedeutet in diesem Zusammenhang, dass zwischen den einzelnen Tests T(n), T(n+1), T(n+2),... jeweils eine Modifikation 9 erfolgt und so Testparameter P, P' schrittweise verschoben werden. Dabei muss aber nicht immer derselbe erste Testparameter P durch die Modifikation 9 verändert werden.

Dadurch, dass der Vorgang iterativ erfolgt, wird die Modifikation 9 vorzugsweise auf jene Testparameter P angewendet, welche beim Test T(n) zwar innerhalb ihres kritischen Bereichs 7 lagen, ihren Grenzwert G jedoch noch nicht überschritten haben. Da sich ein besagter Testparameter P ja bereits im kritischen Bereich 7 befindet, reicht möglicherweise eine nur geringe Modifikation 9 aus um seinen Grenzwert G zu überschreiten. Dabei ist jedoch zu beachten, dass ein sicheres Überschreiten, oder auch genaues Erreichen des Grenzwertes G nicht vorausgesagt werden kann, da sich, wie bereits ausgeführt, aufgrund vielfältiger Zusammenhänge zwischen den Testparametern P auch deren Grenzwerte G verschieben können, beziehungsweise diese noch nicht bekannt sind.

Der so gebildete neue Test T(n+1) entspricht daher vorzugsweise einem Test T(n) bei welchem ein Testparameter P, welcher beim Test T(n) seinen Grenzwert G nicht überschritten hat, nun seinen Grenzwert G überschreitet, also im Bereich zwischen kontrollierten Fahrverhalten und Kontrollverlust liegt, wobei ein Fahrerassistenzsystem 3 aktiv Hilfestellung leistet. Dies ist genau jener Bereich, der beim Testen von Fahrerassistenzsystemen 3 größtmögliches Potential für die Weiterentwicklung in sich trägt. Dabei lässt sich erkennen, ob das Fahrerassistenzsystem 3 soweit hilfestellend eingreifen kann, so dass es auch bei Test T(n+1), bei welchem das Fahrerassistenzsystem 3 mit hoher Wahrscheinlichkeit im kritischen Bereich getestet wird, zu keinem Kontrollverlust oder Unfall beziehungsweise zu keiner unerwünschten Fahrsituation 5 kommt und der Test T(n+1) somit bestanden wird. Mit "hoher Wahrscheinlichkeit" deshalb, weil das Verschieben des/der Testparameter P, wie bereits beschrieben, iterativ erfolgen kann und nicht zwangsläufig sichergestellt sein kann, ob ein besagter Testparameter P tatsächlich innerhalb seines kritischen Bereichs 7 liegt oder sogar seinen Grenzwert G erreicht oder überschreitet. Sollte der entsprechende Testparameter P seinen Grenzwert G nicht erreicht oder überschritten haben, wurde ein neuer Test T(n+1) durchgeführt, bei welchem möglicherweise andere Testparameter P ihren Grenzwert erreicht oder überschritten haben.

Sollte es trotz Eingreifen des Fahrerassistenzsystems 3 nicht möglich sein, den Test T(n+1) basierend auf ein Testszenario 4 zu bestehen, wird, wie bereits beschrieben, eine Analyse 8 durchgeführt, da möglicherweise eine Schwachstelle des Fahrerassistenzsystems 3 gefunden wurde. Die Analyse 8 kann in weiterer Folge eine Behebung aufgetretener Fehler bereits in der Entwicklungsphase des Fahrerassistenzsystems 3 auslösen.

Die beschriebene Modifikation 9 des Tests T(n) kann selbstverständlich beliebig oft/lange erfolgen, aus diesem Grund können entsprechende Abbruchkriterien, wie beispielsweise eine maximale Anzahl an Modifikationen 9 eines Tests T(n) oder eine maximale Testzeit, vorgesehen werden. Ist besagtes Abbruchkriterium erfüllt, kann eine weitere, in der Datenbank 2 gespeicherte Umgebung als neues Testszenario 4 herangezogen und ein neuer Test T(m) durchgeführt werden. Auch für Test T(m) werden wieder Modifikationen von Testparametern P durchgeführt und dadurch weitere Tests T(m+1), T(m+2),... gebildet.

Figur 4 zeigt einen Ausschnitt aus dem in Figur 3 dargestellten Schema mit einer vorteilhaften Ergänzung. Wie bereits beschrieben, wird bei einem realen Test die Fahrsituation 5 in der sich das Fahrzeug befindet vom Fahrerassistenzsystem 3 in bekannter Weise über entsprechende Sensorik ermittelt. Wird die Umgebung virtuell simuliert, werden dem Fahrerassistenzsystem 3 entsprechend simulierte Sensordaten zu Verfügung gestellt. Aus diesen realen oder simulierten Sensordaten werden durch das Fahrerassistenzsystem 3 Testparameter P errechnet beziehungsweise eine interne Fahrsituation 31 erstellt, welche auf der Summe der dem Fahrerassistenzsystem 3 zu Verfügung gestellten Daten basiert.

Konnte ein Fahrerassistenzsystem 3 durch seine Hilfestellung eine unerwünschte Fahrsituation 5, wie beispielsweise eine Kollision nicht verhindern, oder hat das Fahrerassistenzsystem 3, trotz Bedarf nicht eingegriffen, beziehungsweise wurde nicht aktiviert, besteht eine mögliche Fehlerquelle darin, dass die Fahrsituation 5 vom Fahrerassistenzsystem 3 "falsch eingeschätzt" wurde. Dies würde darauf hindeuten, dass die interne Fahrsituation 31 nicht der tatsächlichen, oder simulierten, Fahrsituation 5 entspricht. Grund dafür könnte beispielsweise sein, das Sensordaten vom Fahrerassistenzsystem 3 falsch verarbeitet werden. Dadurch ergibt sich zwischen den, für die interne Fahrsituation 31, errechneten Testparametern P und deren tatsächlichen Werten, welche die Fahrsituation 5 beschreiben, eine gewisse Differenz.

Um derartige, mögliche Fehler zu detektieren kann, wie in Figur 3 dargestellt, die interne Fahrsituation 31 und die reale, oder simulierte, Fahrsituation 5 einem Vergleich 11 zugeführt werden. Ergibt sich aus dem Vergleich 11 eine, wie oben beschrieben, Differenz zwischen interner Fahrsituation 31 und tatsächlicher, oder simulierter, Fahrsituation 5 und überschreitet diese Differenz einen zulässigen, frei wählbaren Wert, wird das Ergebnis des Vergleichs 11 einer Analyse 8 unterzogen. Dadurch können wiederum mögliche Fehler und/oder Schwachstellen des Fahrerassistenzsystems 3 erkannt werden und deren Behebung bereits in der Entwicklungsphase des Fahrerassistenzsystems 3 erfolgen.

## Patentansprüche

1. Verfahren zur Validierung eines Fahrerassistenzsystems (3) eines Fahrzeuges, wobei für ein vorgegebenes Testszenario (4) durch Testparameter (P) definierte Tests (T) durchlaufen werden, **dadurch gekennzeichnet, dass** während eines ersten Tests (T(n)) zumindest ein Testparameter (P) bestimmt wird und zur Erstellung eines zweiten Tests (T(n+1)) der erste Test (T(n)) derart abgeändert wird, um den Testparameter (P) innerhalb eines ihm zugeordneten kritischen Bereichs (7), innerhalb dessen ein Fahrerassistenzsystem aktiv in ein Fahrgeschehen eingreift, zu verschieben und für das vorgegebene Testszenario (4) der zweite Test (T(n+1)) durchlaufen wird um das Fahrerassistenzsystem (3) zu validieren.

2. Verfahren nach Anspruch 1, **dadurch gekennzeichnet, dass** der Testparameter (P) selbst verändert wird, so dass er innerhalb eines kritischen Bereichs (7) liegt.

3. Verfahren nach Anspruch 1, **dadurch gekennzeichnet, dass** der Testparameter (P) von weiteren Testparametern (P') abhängig ist und dass diese weiteren Testparameter (P') so verändert werden, dass der Testparameter (P) innerhalb eines kritischen Bereichs (7) liegt.

4. Verfahren nach einem der Ansprüche 1 bis 3, **dadurch gekennzeichnet, dass** zur Erstellung des zweiten Tests (T(n+1)) der erste Test (T(n)) so abgeändert wird, dass der Testparameter (P) einen Grenzwert (G), bei dessen Erreichen oder Überschreiten das Fahrerassistenzsystem (3) zur Hilfestellung aktiviert wird, überschreitet.

5. Verfahren nach einem der Ansprüche 1 bis 4, **dadurch gekennzeichnet, dass** die Tests (T) im realen Fahrversuch und/oder auf entsprechenden Prüfständen mit einem zumindest teilweise realen Fahrzeug und/oder auch gänzlich virtuell durchgeführt werden.

6. Verfahren nach einem der Ansprüche 1 bis 5, **dadurch gekennzeichnet, dass** das Fahrerassistenzsystem (3) aus mehreren, einzeln wirkenden Fahrerassistenzsystemen gebildet wird.

7. Verfahren nach einem der Ansprüche 1 bis 6, **dadurch gekennzeichnet, dass** dem Fahrerassistenzsystem (3) reale oder virtuelle Sensordaten zur Verfügung gestellt werden, **dass** das Fahrerassistenzsystem (3) aus den Sensordaten Testparameter (P) errechnet, daraus eine interne Fahrsituation (31) erstellt und die interne Fahrsituation (31) mit der realen oder virtuellen Fahrsituation (5) verglichen wird.

## Claims

1. A method for validating a driver assistance system (3) of a vehicle, wherein for a predetermined test scenario (4), tests (T) defined by test parameters (P) are carried out, **characterized in that** during a first test (T(n)), at least one test parameter (P) is determined, and to generate a second test (T(n+1)), the first test (T(n)) is altered in such a way as to displace the test parameter (P) with a critical range (7) assigned to it, within which a driver assistance system actively intervenes in a driving event, and for the predetermined test scenario (4), the second test (T(n+1)) is carried out in order to validate the driver assistance system (3).

2. The method according to claim 1, **characterized in that** the test parameter (P) is itself altered, so that it lies within a critical range (7).

3. The method according to claim 1, **characterized in that** the test parameter (P) is dependent on further test parameters (P'), and that these further test parameters (P') are altered such that the test parameter (P) lies within a critical range (7).

4. The method according to any one of claims 1 to 3, **characterized in that** to generate the second test (T(n+1), the first test (T(n) is altered such that the test parameter (P) exceeds a limit value (G) such that when it is reached or exceeded, the driver assistance system (3) is activated to provide assistance.

5. The method according to any one of claims 1 to 4, **characterized in that** the tests (T) are carried out in a real-life driving test and/or on the corresponding test stands with an at least partially real vehicle and/or also entirely virtually.

6. The method according to any one of claims 1 to 5, **characterized in that** the driver assistance system (3) is formed from a number of individual functioning driver assistance systems.

7. The method according to any one of claims 1 to 6, **characterized in that** real or virtual sensor data are made available to the driver assistance system (3), and **that** the driver assistance system (3) calculates the test parameters (P) from the sensor data, generates an internal driving situation (31) from that, and the internal driving situation (31) is compared with the real or virtual driving situation (5).

## Revendications

1. Procédé de validation d'un système d'assistance à la conduite (3) d'un véhicule, des tests (T) définis par des paramètres de test (P) étant effectués pour un scénario de test (4) prédéterminé, **caractérisé en ce qu'**au moins un paramètre de test (P) est déterminé pendant un premier test (T(n)) et le premier test (T(n)) est ainsi modifié pour créer un second test (T(n+1)), afin de déplacer le paramètre de test (P) à l'intérieur d'une zone critique (7) qui lui est affectée, à l'intérieur de laquelle un système d'assistance à la conduite intervient activement dans un événement de conduite, et le second Test (T(n+1)) étant effectué pour valider le système d'assistance à la conduite (3) pour le scénario de test (4) prédéterminé.

2. Procédé selon la revendication 1, **caractérisé en ce que** le paramètre de test (P) lui-même est modifié de sorte qu'il se trouve dans une zone critique (7).

3. Procédé selon la revendication 1, **caractérisé en ce que** le paramètre de test (P) dépend d'autres paramètres de test (P') et **en ce que** ces autres paramètres de test (P') sont modifiés de telle sorte que le paramètre de test (P) se trouve dans une zone critique (7).

4. Procédé selon l'une des revendications 1 à 3, **caractérisé en ce que**, pour créer le second test (T(n+1)), le premier test (T(n)) est modifié de telle sorte que le paramètre de test (P) dépasse une valeur limite (G) qui, lorsqu'elle est atteinte ou dépassée, entraîne l'activation du système d'assistance à la conduite (3) aux fins d'assistance.

5. Procédé selon l'une des revendications 1 à 4, **caractérisé en ce que** les tests (T) sont effectués dans des essais sur route réels et/ou sur des bancs d'essai correspondants avec un véhicule au moins partiellement réel et/ou également complètement virtuel.

6. Procédé selon l'une des revendications 1 à 5, **caractérisé en ce que** le système d'assistance à la conduite (3) est constitué d'une pluralité de systèmes d'assistance à la conduite agissant individuellement.

7. Procédé selon l'une des revendications 1 à 6, **caractérisé en ce que** des données de capteur réelles ou virtuelles sont mises à la disposition du système d'assistance à la conduite (3), **en ce que** le système d'assistance à la conduite (3) calcule des paramètres de test (P) à partir des données de capteur, une situation de conduite interne (31) étant créée sur cette base, et la situation de conduite interne (31) étant comparée à la situation de conduite (5) réelle ou virtuelle.
